# FASCICULE DE BREVET EUROPEEN

(11) **EP 1 540 326 B1**
(45) Date de publication et mention de la délivrance du brevet: **19.11.2008**
(21) Numéro de dépôt: 03722982.0
(22) Date de dépôt: 20.05.2003
(51) Int. Cl.: G01N 27/60, G01N 19/04

(54) **CONTROLE DE PROPRETE DE SURFACES**
ÜBERWACHUNG DER SAUBERKEIT VON OBERFLÄCHEN
CONTROLLING THE CLEANLINESS OF SURFACES

(30) Priorité: 19.09.2002 CH 158602
(43) Date de publication de la demande: 15.06.2005
(73) Titulaire: NGL Cleaning Technology SA, 1260 Nyon (CH)
(72) Inventeur: LETELLIER, Georges, CH-1207 Genève (CH)
(74) Mandataire: Micheli & Cie SA
(86) Numéro de dépôt international: PCT/IB2003/002064
(87) Numéro de publication internationale: WO 2004/027409

(56) Documents cités:
- FR-A- 2 606 512
- US-A- 4 188 824
- US-A1- 2002 001 077

## Description

La présente invention concerne le contrôle de propreté de surfaces électriquement conductrices et destinées à recevoir un revêtement.

Les surfaces des pièces électriquement conductrices, et notamment métalliques, sont très souvent contaminées par des polluants tels que des oxydes ou des corps gras et ce même après avoir été nettoyées.

Lorsque l'on souhaite déposer un revêtement, par exemple une couche de protection ou de colle, sur une surface d'un substrat, il est important de pouvoir contrôler au préalable l'état de propreté ou niveau de contamination de ladite surface. De cet état de propreté dépendra en effet la qualité de la liaison entre le substrat et le revêtement.

Plusieurs techniques existent à ce jour pour contrôler l'état de propreté d'une surface électriquement conductrice. La plus conventionnelle d'entre elles est la technique dite de « mouillabilité », consistant à vérifier si la surface, lorsqu'elle est mise en présence d'eau, laisse se former un film d'eau continu. Cette technique essentiellement qualitative ne permet pas de quantifier le degré de propreté de la surface. Une autre technique est décrite dans le brevet américain US 4 188 824. Elle consiste à appliquer et presser fermement un ruban adhésif sur la surface à contrôler, à décoller le ruban d'un mouvement franc et rapide, et à caractériser la contamination du ruban par comparaison à des standards acceptables.

D'autres méthodes ont été proposées qui sont capables de délivrer des valeurs électriques dépendant du degré de propreté. La plus fiable de ces méthodes semble être celle décrite dans la demande de brevet français FR-A-2 606 512 et consistant à déposer dans une zone déterminée de la surface une quantité définie de charges électriques positives, à relever le potentiel de surface au centre de ladite zone après le dépôt de charges, à déterminer la valeur dérivée en fonction du temps de ce potentiel au moins à des instants définis et à comparer cette valeur dérivée avec celle obtenue sur une surface de référence. Ces méthodes relèvent certes d'une approche plus quantitative que la technique de mouillabilité, mais présentent toutes l'inconvénient de produire des résultats difficiles à interpréter et qui n'ont un sens que lorsqu'ils sont comparés à ceux obtenus avec des surfaces de référence.

La présente invention vise à remédier aux inconvénients précités.

A cette fin, il est prévu selon l'invention un procédé de construction d'une table de correspondance pour le contrôle de propreté de premières surfaces faites dans une même matière électriquement conductrice et ayant des états de surface mécaniques sensiblement identiques, procédé dans lequel, pour chaque surface d'une pluralité de secondes surfaces faites dans la même matière que les premières surfaces et ayant des états de surface mécaniques sensiblement identiques à ceux des premières surfaces et des degrés de propreté différents les uns des autres, l'on détermine une première valeur électrique représentative du degré de propreté de la surface, l'on dépose un revêtement sur la surface, revêtement qui est du même type pour toutes les secondes surfaces, l'on mesure une seconde valeur représentative du degré d'adhérence du revêtement sur la surface et l'on inclut dans la table de correspondance les première et seconde valeurs. Par « état de surface mécanique » on entend le caractère plus ou moins poli ou rugueux de la surface.

La présente invention prévoit également l'utilisation d'une table de correspondance selon la revendication 7.

La présente invention repose sur la constatation que, si aucun procédé de contrôle de propreté existant à ce jour ne peut réellement quantifier l'état de propreté d'une surface, les procédés de mesure d'adhérence sont eux capables de fournir des valeurs caractéristiques du degré d'adhérence d'un revêtement sur un substrat et immédiatement interprétables par un homme du métier.

Or le degré d'adhérence d'un revêtement sur une surface d'un substrat est proportionnel au degré de propreté de ladite surface. Par la table de correspondance selon l'invention, il est donc possible, après une mesure électrique de l'état de propreté d'une surface électriquement conductrice destinée à recevoir un revêtement donné, de connaître par avance le degré d'adhérence, valeur directement interprétable, qui sera obtenu après le dépôt du revêtement sur la surface.

Il est important de noter que les procédés actuels de mesure d'adhérence sont relativement compliqués à mettre en oeuvre et, surtout, sont destructifs, c'est-à-dire qu'ils endommagent de manière irréversible les pièces qu'ils analysent. L'emploi de tels procédés dans des chaînes de production apparaît donc exclu. En revanche, les procédés électriques de contrôle de propreté sont généralement simples d'utilisation et n'ont aucun caractère destructif. La présente invention permet donc de vérifier de manière fiable, dans un processus de fabrication et avant de procéder au dépôt du revêtement, si la surface correspondante du substrat est suffisamment propre pour garantir le succès de l'opération ultérieure de dépôt du revêtement. S'il est déterminé que la pièce n'est pas suffisamment propre, la valeur électrique obtenue étant inférieure à un seuil déterminé correspondant à un seuil minimal d'adhérence souhaité, cette pièce pourra être écartée ou être soumise à un nettoyage supplémentaire.

D'autres caractéristiques et avantages de la présente invention apparaîtront à la lecture de la description détaillée suivante faite en référence aux dessins annexés dans lesquels :
- la figure 1 montre une succession d'étapes mises en oeuvre par le procédé selon l'invention ;
- les figures 2A et 2B montrent schématiquement un dispositif de contrôle de propreté de surface utilisé dans l'invention ; et
- les figures 3A à 3D représentent des courbes de potentiel en fonction du temps obtenues avec le dispositif des figures 2A et 2B.

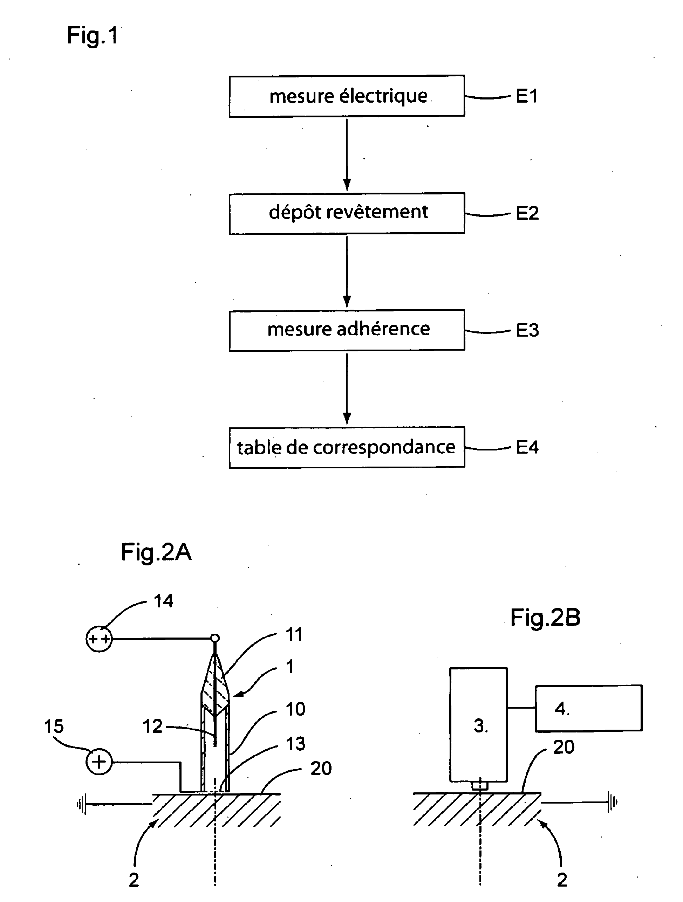

En référence à la figure 1, un procédé selon l'invention de construction d'une table de correspondance pour le contrôle de propreté de surface comprend, pour chaque pièce d'un ensemble de pièces identiques et électriquement conductrices, par exemple métalliques, mais ayant des niveaux de contamination différents :
- une première étape E1 au cours de laquelle une valeur électrique caractéristique de l'état de propreté d'une surface de la pièce est déterminée,
- une seconde étape E2 au cours de laquelle un revêtement est déposé sur ladite surface,
- une troisième étape E3 au cours de laquelle le degré d'adhérence du revêtement sur ladite surface est mesuré, et
- une quatrième étape E4 au cours de laquelle les valeurs de propreté et d'adhérence obtenues aux étapes E1 et E3 sont incluses dans la table de correspondance.

L'étape E1 est mise en oeuvre, de préférence, à l'aide d'un dispositif de contrôle de propreté de surface du type de celui décrit dans le document FR-A-2 606 512 et commercialisé sous le nom « CORONASURF » (marque déposée).

Ce dispositif comporte, comme illustré à la figure 2A, une source de charges positives 1 comprenant un corps tubulaire isolant 10 fermé dans sa partie supérieure par un isolateur 11. L'isolateur 11 est traversé par une électrode filiforme 12 se terminant en une pointe effilée. A l'extrémité inférieure du corps tubulaire 10 est disposée une grille conductrice 13. L'électrode 12 et la grille conductrice 13 sont respectivement connectées à une source de potentiel élevé 14 (d'environ 6000 V) et à une source de potentiel modéré 15 (d'environ 100 V). L'origine des potentiels est prise dans la masse de la pièce conductrice analysée. Cette pièce, désignée par le repère 2, est placée en face de la grille 13 et reçoit ainsi sur l'une de ses surfaces 20 des charges électriques positives qui sont produites au niveau de l'extrémité de l'électrode 12 par effet couronne. Afin d'éviter tout processus d'implantation ou de pulvérisation, la différence de potentiel et la distance entre la grille 13 et la surface 20 de la pièce 2 sont choisies pour que l'énergie cinétique des charges positives, compte tenu du freinage des charges par les collisions de l'atmosphère, soit inférieure à un électron-volt. Le dépôt des charges est en outre réalisé en quantité limitée, par exemple 1 µC/cm² en 5 secondes, de façon à ne pas modifier sensiblement les propriétés de la surface 20.

Après cette opération de dépôt de charges positives, la sonde d'un voltmètre électrostatique 3 est placée sur la zone de la surface 20 précédemment en regard de la grille 13, de telle manière que l'axe de la sonde soit perpendiculaire à la surface 20 en passant par le centre de la zone précitée (figure 2B). Le dispositif de contrôle de propreté de surface comprend à cet effet un organe de translation (non représenté) qui déplace l'ensemble source de dépôt de charges 1 - voltmètre 3 par rapport à la pièce 2. Le potentiel de surface relevé par le voltmètre électrostatique 3 est enregistré dans une unité de traitement 4 reliée au voltmètre 3.

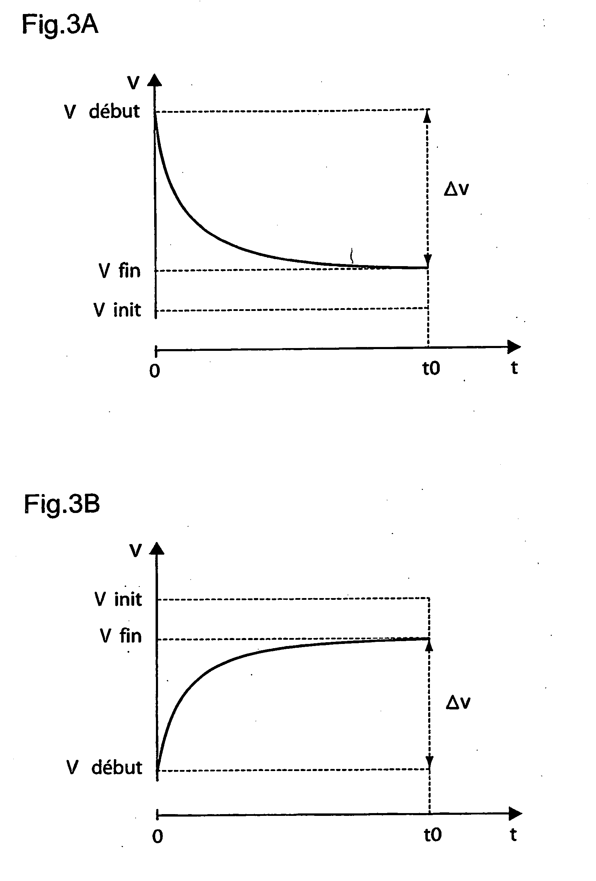

La figure 3A montre la courbe du potentiel de surface en fonction du temps, V(t), qui est obtenue dans le cas d'une pièce 2 dont la surface 20 est contaminée. Cette courbe est décroissante et part d'un potentiel de début de mesure Vdébut positif, relevé immédiatement après le dépôt de charges, pour tendre vers le potentiel initial Vinit, c'est-à-dire le potentiel avant le dépôt de charges.

La figure 3B montre la courbe du potentiel de surface en fonction du temps, V(t), qui est obtenue dans le cas d'une pièce 2 dont la surface 20 est très propre. Cette courbe est croissante et part d'un potentiel de début de mesure Vdébut négatif, relevé immédiatement après le dépôt de charges, pour tendre vers le potentiel initial Vinit.

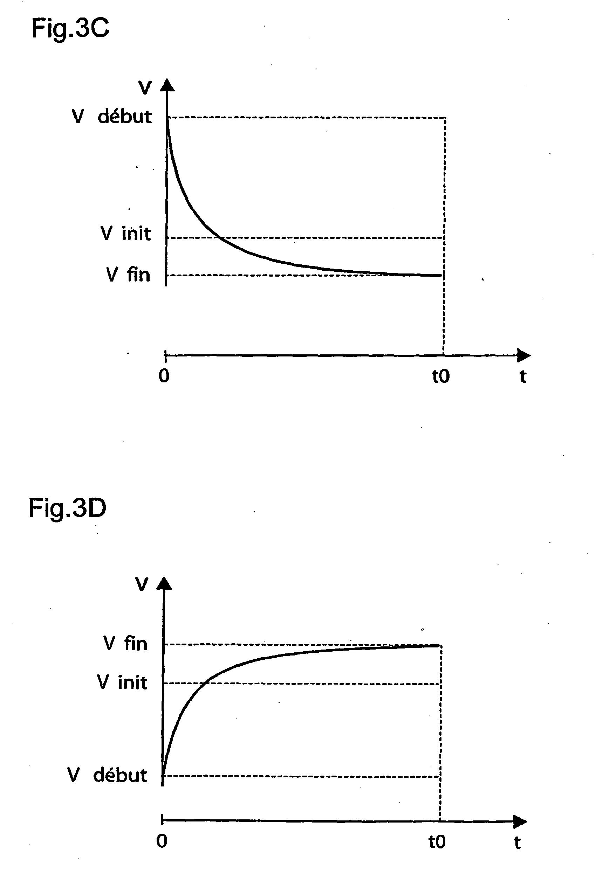

Les figures 3C et 3D montrent deux cas de figure, respectivement pour une pièce contaminée et une pièce très propre, dans lesquels le potentiel décroît/croît au-delà du potentiel initial Vinit. Ces cas se produisent lorsque la quantité de charges déposées est trop importante et a entraîné une dégradation chimique de la couche de contamination présente sur la surface 20. Pour obtenir des courbes exploitables, du type de celles illustrées aux figures 3A et 3B, il convient de réduire cette quantité de charges, par exemple en diminuant le temps d'exposition de la surface 20.

A partir de ces courbes de potentiel, l'unité de traitement 4 calcule une valeur électrique représentative de la variation du potentiel en fonction du temps. Cette valeur électrique est par exemple une valeur dérivée dV/dt prise à un ou plusieurs instants prédéterminés après le dépôt de charges, comme le propose le document FR-A-2 605 512, ou une valeur ΔV égale à la différence entre un potentiel dit « asymptotique » Vfin, pris après un temps t0 suffisant pour que la décroissance/croissance de la courbe soit devenue très faible, et le potentiel de début Vdébut.

Il va de soi que les conditions de mise en oeuvre de l'étape E1 décrite ci-dessus, en particulier la quantité de charges déposées et le temps d'acquisition t0, sont identiques pour toutes les pièces de l'ensemble.

L'étape E2 est une étape classique de dépôt sous vide. Le type de revêtement déposé est le même pour toutes les pièces de l'ensemble. On entend par là que la matière constituant le revêtement est la même pour toutes ces pièces, l'épaisseur du revêtement pouvant en revanche varier. Le revêtement déposé à l'étape. E2 est par exemple une couche de protection ou de colle.

L'étape E3 est mise en oeuvre, de préférence, à l'aide d'un dispositif commercialisé par la société suisse CSEM Instruments sous le nom de « NANO-SCRATCH TESTER » (marque déposée). Ce dispositif mesure l'adhérence d'un revêtement en effectuant une rayure sur celui-ci au moyen d'une pointe diamantée sur laquelle est appliquée une force normale croissante. La valeur d'adhérence du revêtement correspond à l'intensité de la force appliquée à la pointe diamantée à l'instant de rupture de ce revêtement, dans le cas de revêtements métalliques, ou à l'instant de fissure du revêtement, dans le cas de revêtements plastiques. Cette valeur d'adhérence est généralement exprimée en mN.

L'étape E4 consiste à inclure dans une base de données la valeur électrique dV/dt ou ΔV représentative du degré de propreté de la surface 20 et la valeur correspondante d'adhérence du revêtement sur cette surface.

Ainsi, après la mise en oeuvre des étapes E1 à E4 pour chaque pièce de l'ensemble, une table de correspondance est construite comprenant des valeurs électriques représentatives de différents degrés de propreté de surfaces identiques électriquement conductrices et des valeurs correspondantes d'adhérence associées à un type de revêtement donné susceptible d'être déposé sur ces surfaces.

Cette table pourra être utilisée lors de la production de pièces identiques à celles ayant servi à la construction de la table et destinées à recevoir un revêtement du même type que celui ayant servi à la construction de la table. Elle permettra en effet à son utilisateur de connaître le degré d'adhérence du revêtement sur une pièce donnée, ou à tout le moins d'en avoir une idée relativement précise, avant le dépôt de ce revêtement, par une mesure électrique non destructive semblable à l'étape E1 décrite ci-dessus, et donc sans recourir à un procédé destructif de mesure directe d'adhérence.

On va maintenant décrire, à titre indicatif, quelques exemples numériques de mise en oeuvre du procédé selon l'invention.

### Exemple 1

Quatre pièces en cuivre identiques A, B, C, D sont préparées.

La pièce A n'est pas nettoyée.

La pièce B subit un traitement de dégraissage au trichloéthylène sous ultra-sons.

La pièce C subit un traitement de dégraissage sous ultra-sons, utilisant une lessive commercialisée par la demanderesse sous la référence « NGL 17.40P ».

La pièce D est avivée.

Ensuite, pour chacune de ces pièces, l'on dépose sur une zone de 1 cm² de la surface de la pièce des charges électriques positives de 1 µC en 5 secondes. Immédiatement après ce dépôt, l'on relève le potentiel au centre de la zone précitée et l'on détermine la différence ΔV entre le potentiel Vfin pris 30 secondes après le début de la mesure et le potentiel Vdébut de début de mesure. Puis l'on dépose une couche de nickel et l'on mesure le degré d'adhérence de ce revêtement à l'aide du « NANO-SCRATCH TESTER ».

Les résultats sont consignés dans le tableau ci-dessous, qui constitue une table de correspondance entre les valeurs électriques de propreté ΔV et les valeurs d'adhérence.

| | ΔV | adhérence |
|---|---|---|
| A | -97 mV | 8 mN |
| B | +21 mV | 39 mN |
| C | +32 mV | 67 mN |
| D | +75 mV | 89 mN |

### Exemple 2

Quatre pièces en acier identiques A, B, C, D sont préparées.

La pièce A n'est pas nettoyée.

La pièce B subit un traitement de dégraissage sous ultra-sons, utilisant une lessive commercialisée par la demanderesse sous le nom de « Rodaclean Supra ».

La pièce C subit deux traitements de dégraissage sous ultra-sons successifs, utilisant respectivement les lessives commercialisées par la demanderesse sous les noms de « Rodaclean Supra » et « NGL 17.40P ».

La pièce D est avivée.

Ensuite, pour chacune de ces pièces, l'on dépose sur une zone de 1 cm² de la surface de la pièce des charges électriques positives de 1 µC en 5 secondes. Immédiatement après ce dépôt, l'on relève le potentiel au centre de la zone précitée et l'on détermine la différence ΔV entre le potentiel Vfin pris 30 secondes après le début de la mesure et le potentiel Vdébut de début de mesure. Puis l'on dépose une couche d'or et l'on mesure le degré d'adhérence de ce revêtement à l'aide du « NANO-SCRATCH TESTER ».

Les résultats sont consignés dans le tableau ci-dessous, qui constitue une table de correspondance entre les valeurs électriques de propreté ΔV et les valeurs d'adhérence.

| | ΔV | adhérence |
|---|---|---|
| A | -64 mV | 12 mN |
| B | +48 mV | 67 mN |
| C | +55 mV | 87 mN |
| D | +134 mV | 101 mN |

L'on peut constater, à la lumière des exemples ci-dessus, que la présente invention offre la possibilité de déterminer pour un type de pièce donné quel est, parmi plusieurs procédés de nettoyage présélectionnés, le procédé le plus efficace. Ainsi, il ressort de l'exemple 1 que, dans le cas de pièces en cuivre, la lessive « NGL 17.40P » donne de meilleurs résultats que le trichloéthylène. De l'exemple 2, l'on peut déduire que, dans le cas de pièces en acier, il est préférable de faire subir aux pièces, en plus du traitement de dégraissage avec la lessive « Rodaclean Supra », un traitement de dégraissage supplémentaire utilisant la lessive « NGL 17.40P ».

Il apparaît donc qu'une application supplémentaire de la table de correspondance selon l'invention, lorsque les pièces ayant servi à la construction de la table ont été préalablement nettoyées par des procédés différents, réside dans le fait de choisir en fonction des valeurs stockées dans la table le procédé de nettoyage à appliquer lors de la production des pièces.

L'invention a été décrite ci-dessus à titre d'exemple uniquement. L'homme du métier se rendra aisément compte que des modifications peuvent être faites sans sortir du cadre de l'invention revendiquée. Il est clair, en particulier, que les pièces servant à construire la table de correspondance n'ont pas nécessairement besoin d'être identiques. Ces pièces peuvent en effet avoir des géométries différentes, l'important étant que ces pièces soient faites dans une même matière et qu'elles aient le même état de surface mécanique, c'est-à-dire le même degré de rugosité, de sorte que le degré d'adhérence soit essentiellement dépendant du degré de propreté de la surface recevant le revêtement.

## Revendications

1. Procédé de construction d'une table de correspondance pour le contrôle de propreté de premières surfaces faites dans une même matière électriquement conductrice et ayant des états de surface mécaniques sensiblement identiques, procédé dans lequel, pour chaque surface d'une pluralité de secondes surfaces faites dans la même matière que les premières surfaces et ayant des états de surface mécaniques sensiblement identiques à ceux des premières surfaces et des degrés de propreté différents les uns des autres, l'on détermine une première valeur électrique représentative du degré de propreté de la surface, l'on dépose un revêtement sur la surface, revêtement qui est du même type pour toutes les secondes surfaces, l'on mesure une seconde valeur représentative du degré d'adhérence du revêtement sur la surface et l'on inclut dans la table de correspondance les première et seconde valeurs.

2. Procédé selon la revendication 1, **caractérisé en ce que** la première valeur est obtenue en déposant dans une zone déterminée de la surface une quantité définie de charges électriques positives, en mesurant le potentiel électrique de la surface au centre de la zone déterminée et en déterminant une valeur représentative de la variation en fonction du temps de ce potentiel électrique, cette valeur constituant ladite première valeur.

3. Procédé selon la revendication 1 ou 2, **caractérisé en ce que** les secondes surfaces sont des surfaces métalliques.

4. Procédé selon l'une quelconque des revendications 1 à 3, **caractérisé en ce que** les secondes surfaces sont des surfaces de pièces électriquement conductrices sensiblement identiques entre elles.

5. Procédé selon l'une quelconque des revendications 1 à 4, **caractérisé en ce qu'**au moins deux surfaces parmi les secondes surfaces ont préalablement été nettoyées par des procédés différents.

6. Procédé selon la revendication 5, **caractérisé en ce qu'**en fonction des premières et secondes valeurs, l'on choisit, parmi lesdits procédés différents, un procédé de nettoyage à appliquer aux premières surfaces.

7. Utilisation d'une table de correspondance comprenant des valeurs électriques représentatives de différents degrés de propreté de surfaces faites dans une même matière électriquement conductrice et ayant des états de surface mécaniques sensiblement identiques et des valeurs correspondantes d'adhérence associées à un type de revêtement donné destiné à être déposé sur ces surfaces, pour contrôler l'état de propreté de ces surfaces avant le dépôt du revêtement.

## Claims

1. Method of constructing a correspondence table for the control of cleanliness of first surfaces made from a same, electrically conductive material and having essentially identical mechanical surface conditions, in which method for each surface among a plurality of second surfaces made from the same material as the first surfaces and having mechanical surface conditions essentially identical with those of the first surfaces but degrees of cleanliness which differ from each other, one determines a first electrical value representative of the degree of surface cleanliness, one deposits on the surface a coating that is of the same type for all second surfaces, one measures a second value representative of the degree of adhesion of the coating to the surface, and one includes the first and second values into the correspondence table.

2. Method according to claim 1, **characterised in that** the first value is obtained by depositing in a determined zone of the surface a defined amount of positive electrical charges, by measuring the electric potential of the surface in the centre of the determined zone, and by determining a value that is representative of the variation of this electric potential as a function of time, this value constituting said first value.

3. Method according to claim 1 or 2, **characterized in that** the second surfaces are metallic surfaces.

4. Method according to one of claims 1 to 3, **characterized in that** the second surfaces are surfaces of electrically conductive pieces which are essentially identical to one another.

5. Method according to one of claims 1 to 4, **characterized in that** at least two surfaces among the second surfaces have been cleaned in advance by different methods.

6. Method according to claim 5, **characterized in that** one selects among said different methods a cleaning method to be applied to the first surfaces, as a function of the first and second values.

7. Use of a correspondence table comprising electrical values representative of different degrees of cleanliness of surfaces made of a same electrically conducting material and having essentially identical mechanical surface conditions, and corresponding values of adhesion associated with a given type of coating to be deposited on these surfaces, in order to control the state of cleanliness of these surfaces prior to depositing the coating.

## Patentansprüche

1. Verfahren zur Konstruktion einer Entsprechungstabelle für die Überwachung der Sauberkeit von ersten Oberflächen, die aus einem gleichen elektrisch leitenden Material hergestellt worden sind und einen im Wesentlichen identischen Oberflächenzustand besitzen, wobei in dem Verfahren für jede Oberfläche einer Mehrzahl von zweiten Oberflächen, die aus dem gleichen Material wie die ersten Oberflächen hergestellt worden sind und einen mit dem Oberflächenzustand der ersten Oberflächen im Wesentlichen identischen Oberflächenzustand, aber voneinander unterschiedliche Grade der Sauberkeit besitzen, ein erster elektrischer Wert bestimmt wird, der für den Grad der Oberflächensauberkeit repräsentativ ist, auf die Oberfläche eine Beschichtung aufgebracht wird, die für alle zweiten Oberflächen vom gleichen Typ ist, ein zweiter, für den Grad der Haftung der Beschichtung auf der Oberfläche repräsentativer Wert gemessen wird und der erste und zweite Wert in die Entsprechungstabelle aufgenommen wird.

2. Verfahren nach Anspruch 1, **dadurch gekennzeichnet, dass** der erste Wert gewonnen wird, indem auf einen bestimmten Oberflächenbereich eine definierte Menge positiver elektrischer Ladungen aufgebracht, das elektrische Potential der Oberfläche in der Mitte des bestimmten Bereichs gemessen und ein Wert bestimmt wird, der für die Veränderung dieses elektrischen Potentials als Funktion der Zeit repräsentativ ist, wobei dieser Wert den genannten ersten Wert darstellt.

3. Verfahren nach Anspruch 1 oder 2, **dadurch gekennzeichnet, dass** die zweiten Oberflächen metallische Oberflächen sind.

4. Verfahren nach einem der Ansprüche 1 bis 3, **dadurch gekennzeichnet, dass** die zweiten Oberflächen von elektrisch leitenden Stücken sind, die im Wesentlichen untereinander identisch sind.

5. Verfahren nach einem der Ansprüche 1 bis 4, **dadurch gekennzeichnet, dass** zumindest zwei von den zweiten Oberflächen im Voraus mit unterschiedlichen Verfahren gereinigt worden sind.

6. Verfahren nach Anspruch 5, **dadurch gekennzeichnet, dass** in Abhängigkeit von den ersten und zweiten Werten unter den unterschiedlichen Verfahren ein Reinigungsverfahren ausgewählt wird, das auf die ersten Oberflächen anzuwenden ist.

7. Verwendung einer Entsprechungstabelle mit elektrischen Werten, die für unterschiedliche Grade der Sauberkeit von Oberflächen repräsentativ sind, die aus einem gleichen, elektrisch leitenden Material gemacht sind und einen im Wesentlichen identischen mechanischen Oberflächenzustand besitzen, und entsprechenden Werten für die Haftung, die mit einem gegebenen Beschichtungstyp verknüpft sind, der auf diese Oberflächen aufgebracht werden soll, um den Zustand der Sauberkeit dieser Oberflächen vor Aufbringen der Beschichtung zu überwachen.
